# EUROPÄISCHE PATENTSCHRIFT

(11) **EP 4 438 865 B1**
(45) Veröffentlichungstag und Bekanntmachung des Hinweises auf die Patenterteilung: **31.12.2025**
(21) Anmeldenummer: 24154374.3
(22) Anmeldetag: 29.01.2024
(51) Int. Cl.: F01P 3/18, B60K 11/02, F01P 5/06, F01P 7/04, F01P 7/08, F01P 11/10, F01P 5/10

(54) **VERFAHREN ZUM BETREIBEN EINES FAHRZEUGKÜHLSYSTEMS**
METHOD FOR OPERATING A VEHICLE COOLING SYSTEM
PROCÉDÉ DE FONCTIONNEMENT D'UN SYSTÈME DE REFROIDISSEMENT DE VÉHICULE

(30) Priorität: 01.03.2023 DE 102023105066
(43) Veröffentlichungstag der Anmeldung: 02.10.2024
(73) Patentinhaber: Deere & Company, Moline, IL 61265 (US)
(72) Erfinder: Billich, Manuel, Mannheim (DE)
(74) Vertreter: Dehnhardt, Florian Christopher

(56) Entgegenhaltungen:
- EP-A1- 2 757 233
- EP-A1- 4 257 809
- DE-A1- 102014 208 545
- DE-A1- 102019 204 468
- FR-A1- 3 093 303
- JP-A- H02 133 233

## Beschreibung

Die Erfindung betrifft ein Verfahren zum Betreiben eines Fahrzeugkühlsystems, das einen Hauptkühlpfad sowie einen am Hauptkühlpfad stromaufwärts abzweigenden Nebenkühlpfad aufweist, wobei dem Hauptkühlpfad ein Hauptkühlaggregat zur Erzeugung eines durch eine erste Wärmetauscheranordnung hindurchtretenden Hauptkühlluftstroms und dem Nebenkühlpfad ein stromaufwärts im Hauptkühlpfad liegendes Nebenkühlaggregat zur Erzeugung eines durch eine zweite Wärmetauscheranordnung hindurchtretenden Nebenkühlluftstroms zugeordnet ist.

Ein solches auf mehrere Kühlpfade verteiltes Fahrzeugkühlsystem findet beispielsweise bei landwirtschaftlichen Traktoren des Herstellers John Deere Verwendung. Dieses umfasst einen von einem Dieselmotor über einen Riementrieb in Drehung versetzbaren Axiallüfter, mittels dessen Luft aus der Außenumgebung durch einen Frontgrill einer Motorhaube angesaugt wird, um einen durch ein Wärmetauscherpaket hindurchtretenden Hauptkühlluftstrom zu erzeugen. Das Wärmetauscherpaket enthält unter anderem einen Motorkühler, einen Ölkühler und einen Klimakondensator einer Fahrzeugklimaanlage, wobei diese im Hauptkühlluftstrom liegend nebeneinander bzw. hintereinander angeordnet sind. Stromaufwärts in einem oberen Randbereich des Hauptkühlluftstroms befindet sich ein weiterer Axiallüfter. Dem weiteren Axiallüfter ist ein separater Antrieb in Gestalt eines hydraulischen oder elektrischen Motors zugeordnet, der der unabhängigen Erzeugung eines im Wesentlichen senkrecht nach oben aus dem Hauptkühlluftstrom abzweigenden Nebenkühlluftstroms dient. Der solchermaßen erzeugte Nebenkühlluftstrom wird durch einen Ladeluftkühler des Dieselmotors geleitet und tritt anschließend an einer Oberseite der Motorhaube des landwirtschaftlichen Traktors in die Außenumgebung aus.

Das bekannte Fahrzeugkühlsystem weist die Eigenschaft auf, dass der Betrieb der beiden Axiallüfter mit jeweils separaten Antrieben vor allem bei mäßigem Kühlbedarf im Niederlastbereich des landwirtschaftlichen Traktors vergleichsweise ineffizient ist.

Jede der Druckschriften DE102014208545 A1 und DE102019204468 A1 der Anmelderin beschreibt ein Verfahren zum Betreiben eines Fahrzeugkühlsystems der herkömmlichen Art.

Aufgabe der vorliegenden Erfindung ist es daher, ein Verfahren der eingangs genannten Art hinsichtlich eines energieeffizienten Betriebs eines auf mehrere Kühlpfade verteilten Fahrzeugkühlsystems zu optimieren.

Diese Aufgabe wird durch ein Verfahren zum Betreiben eines Fahrzeugkühlsystems mit den Merkmalen des Patentanspruchs 1 gelöst.

Bei einem Verfahren zum Betreiben eines Fahrzeugkühlsystems weist das Fahrzeugkühlsystem einen Hauptkühlpfad sowie einen am Hauptkühlpfad stromaufwärts abzweigenden Nebenkühlpfad auf, wobei dem Hauptkühlpfad ein Hauptkühlaggregat zur Erzeugung eines durch eine erste Wärmetauscheranordnung hindurchtretenden Hauptkühlluftstroms und dem Nebenkühlpfad ein stromaufwärts im Hauptkühlpfad liegendes Nebenkühlaggregat zur Erzeugung eines durch eine zweite Wärmetauscheranordnung hindurchtretenden Nebenkühlluftstroms zugeordnet ist. Hierbei wird von einer Kontrolleinheit in einem ersten Betriebsmodus sowohl das Hauptkühlaggregat wie auch das Nebenkühlaggregat betrieben, um voneinander unabhängige Kühlluftströme zu erzeugen, wohingegen von der Kontrolleinheit in einem zweiten Betriebsmodus ausschließlich das Hauptkühlaggregat betrieben bzw. das Nebenkühlaggregat in einen Leerlaufbetriebszustand derart versetzt wird, sodass aufgrund der stromaufwärts im Hauptkühlluftstrom herrschenden Druckverhältnisse ein durch die zweite Wärmetauscheranordnung hindurchtretender passiver Nebenkühlluftstrom hervorgerufen wird.

Der erste Betriebsmodus entspricht hierbei einem konventionellen Betrieb der beiden Kühlaggregate mit aktiver Erzeugung sowohl des Haupt- wie auch des Nebenkühlluftstroms, wohingegen im zweiten Betriebsmodus das Nebenkühlaggregat gezielt außer Betrieb gesetzt ist bzw. sich in einem Leerlaufbetriebszustand befindet, sodass eine Leistungsaufnahme im Wesentlichen auf den Betrieb des Hauptkühlaggregats beschränkt ist. Dies trägt Umständen Rechnung, in denen der Kühlbedarf der zweiten Wärmetauscheranordnung so gering ist, dass die Erzeugung eines durch den zweiten Wärmetauscher in umgekehrter Richtung hindurchtretenden passiven Nebenkühlluftstroms für die Zwecke einer ausreichenden Wärmeabfuhr genügt. Durch bedarfsgerechte Auswahl des ersten oder zweiten Betriebsmodus lässt sich daher das verteilte Fahrzeugkühlsystem besonders energieeffizient betreiben.

Die Kühlaggregate umfassen typischerweise jeweils einen Axiallüfter, der im Falle des Hauptkühlaggregats über einen Riementrieb eines Dieselmotors des landwirtschaftlichen Traktors und im Falle des Nebenkühlaggregats mittels eines separaten hydraulischen oder elektrischen Motors in Drehung versetzt wird. Für den im zweiten Betriebsmodus vorgesehenen Leerlaufbetriebszustand bedeutet dies, dass typischerweise eine Lüfterdrehzahl im Bereich von 10 bis 15 Umdrehungen pro Minute gewählt wird. Die Wahl einer solch geringen Lüfterdrehzahl stellt sicher, dass der passive Nebenkühlluftstrom im Leerlaufbetriebszustand unbeeinflusst bleibt, es jedoch aufgrund der sich drehenden Lüfterflügel des Axiallüfters ersichtlich ist, dass sich das Fahrzeugkühlsystem gerade in Betrieb befindet und daher insbesondere bei geöffneter Motorhaube ein potentielles Verletzungsrisiko birgt.

Der Vollständigkeit halber sei angemerkt, dass der Begriff des "Kühlpfads" vorliegend abstrakt verwendet wird und den für den Verlauf des jeweiligen Kühlluftstroms vorgesehenen bzw. vorgegebenen Weg bezeichnet, ungeachtet dessen, ob ein derartiger Kühlluftstrom gerade vorhanden ist oder nicht.

Vorteilhafte Weiterbildungen des erfindungsgemäßen Verfahrens gehen aus den Unteransprüchen hervor.

Vorzugsweise wird der erste oder zweite Betriebsmodus in Abhängigkeit einer von der Kontrolleinheit durchgeführten Ermittlung des aktuellen Kühlbedarfs der zweiten Wärmetauscheranordnung ausgewählt.

Aus Gründen der Energieeffizienz erfolgt seitens der Kontrolleinheit stets eine Priorisierung des zweiten Betriebsmodus. Abweichend davon wird jedoch der erste Betriebsmodus ausgewählt, wenn die Kontrolleinheit auf Grundlage der durchgeführten Kühlbedarfsermittlung erkennt, dass die durch Erzeugung des passiven Nebenkühlluftstroms erzielbare Kühlleistung nicht genügt, um den Kühlbedarf der zweiten Wärmetauscheranordnung verlässlich abzudecken. Gleiches gilt, wenn von der Kontrolleinheit erkannt wird, dass die volle Leistung des Hauptkühlaggregats zur ausreichenden Kühlung der ersten Wärmetauscheranordnung erforderlich ist.

Insofern wird also bei der Auswahl des Betriebsmodus von der Kontrolleinheit der ermittelte Kühlbedarf der ersten Wärmetauscheranordnung mitberücksichtigt.

Um den aktuellen Kühlbedarf zu ermitteln, können von der Kontrolleinheit die in jeweiligen Kühlkreisläufen der Wärmetauscheranordnungen sensorisch erfassten Temperaturverhältnisse in Beziehung zur Außentemperatur gesetzt werden. Zur sensorischen Erfassung der in den Kühlkreisläufen herrschenden Temperaturverhältnisse sowie der Außentemperatur ist eine entsprechende Anzahl von Temperatursensoren vorhanden, deren Sensordaten der Kontrolleinheit über einen fahrzeuginternen CAN-Datenbus oder eine vergleichbare Datenübertragungsschnittstelle zugeführt werden.

Weiterhin besteht die Möglichkeit, dass im zweiten Betriebsmodus die Intensität des Hauptkühlluftstroms von der Kontrolleinheit durch Ansteuerung des Hauptkühlaggregats insbesondere nach Maßgabe eines für die erste Wärmetauscheranordnung ermittelten Kühlbedarfs erhöht wird. Durch entsprechende Anhebung der Kühlleistung des Hauptkühlaggregats lässt sich unter anderem verhindern, dass bei Außerbetriebnahme bzw. im Leerlaufbetriebszustand des Nebenkühlaggregats die Kühlung der ersten Wärmetauscheranordnung aufgrund der über den passiven Nebenkühlluftstrom in den Hauptkühlluftstrom zusätzlich eintretenden Abwärme der zweiten Wärmetauscheranordnung beeinträchtigt wird.

Das erfindungsgemäße Verfahren zum Betreiben eines Fahrzeugkühlsystems wird im Folgenden anhand der Zeichnungen näher beschrieben. Dabei beziehen sich identische Bezugszeichen auf übereinstimmende oder bezüglich ihrer Funktion vergleichbare Komponenten. Es zeigen:
- Fig. 1: ein schematisch dargestelltes Ausführungsbeispiel eines auf mehrere Kühlpfade verteilten Fahrzeugkühlsystems eines landwirtschaftlichen Traktors in einem ersten Betriebsmodus, und
- Fig. 2: das in Fig. 1 wiedergegebene Fahrzeugkühlsystem in einem zweiten Betriebsmodus.

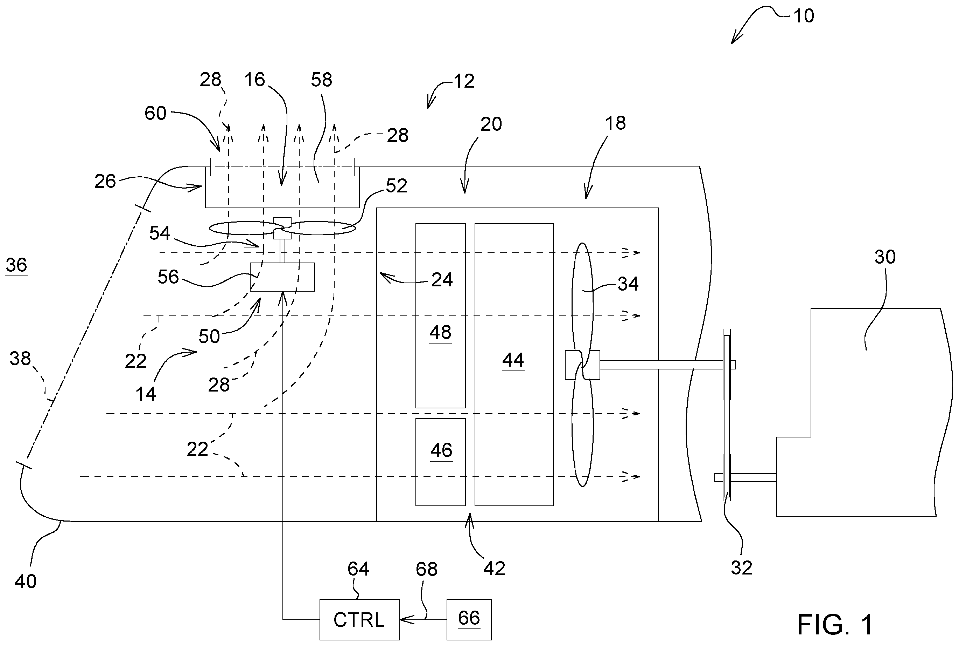

Fig. 1 zeigt in schematischer Darstellung ein Ausführungsbeispiel eines auf mehrere Kühlpfade verteilten Fahrzeugkühlsystems.

Das in einem nicht näher abgebildeten landwirtschaftlichen Traktor 10 untergebrachte Fahrzeugkühlsystem 12 weist einen Hauptkühlpfad 14 sowie einen am Hauptkühlpfad 14 stromaufwärts abzweigenden Nebenkühlpfad 16 auf, wobei dem Hauptkühlpfad 14 ein Hauptkühlaggregat 18 zur Erzeugung eines durch eine erste Wärmetauscheranordnung 20 hindurchtretenden Hauptkühlluftstroms 22 und dem Nebenkühlpfad 16 ein stromaufwärts im Hauptkühlpfad 14 liegendes Nebenkühlaggregat 24 zur Erzeugung eines durch eine zweite Wärmetauscheranordnung 26 hindurchtretenden Nebenkühlluftstroms 28 zugeordnet ist.

Beispielsgemäß umfasst das Hauptkühlaggregat 18 einen von einem Dieselmotor 30 des landwirtschaftlichen Traktors 10 über einen Riementrieb 32 in Drehung versetzbaren Axiallüfter 34, mittels dessen Luft aus der Außenumgebung 36 durch einen Frontgrill 38 einer Motorhaube 40 angesaugt wird, um den durch die erste Wärmetauscheranordnung 20 hindurchtretenden Hauptkühlluftstrom 22 zu erzeugen. Die als Wärmetauscherpaket 42 ausgebildete erste Wärmetauscheranordnung 20 enthält unter anderem einen Motorkühler 44, einen Ölkühler 46 und einen Klimakondensator 48 einer Fahrzeugklimaanlage, wobei diese im Hauptkühlluftstrom 22 liegend nebeneinander bzw. hintereinander angeordnet sind.

Beispielsgemäß befindet sich der Axiallüfter 34 bezüglich der Richtung des Hauptkühlluftstroms 22 hinter dem Wärmetauscherpaket 42, dieser kann jedoch auch davor angeordnet sein.

Bei dem Nebenkühlaggregat 24 handelt es sich um einen stromaufwärts in einem oberen Randbereich 50 des Hauptkühlluftstroms 22 liegenden weiteren Axiallüfter 52. Dem weiteren Axiallüfter 52 ist ein separater Antrieb 54 in Gestalt eines hydraulischen oder elektrischen Motors 56 zugeordnet, der der unabhängigen Erzeugung des im Wesentlichen senkrecht nach oben aus dem Hauptkühlluftstrom 22 abzweigenden Nebenkühlluftstroms 28 dient. Entsprechend einem in Fig. 1 wiedergegebenen ersten Betriebsmodus des Fahrzeugkühlsystems 12 wird der mittels des weiteren Axiallüfters 52 erzeugte Nebenkühlluftstrom 28 durch einen von der zweiten Wärmetauscheranordnung 26 umfassten Ladeluftkühler 58 des Dieselmotors 30 geleitet und tritt anschließend an einer Oberseite 60 der Motorhaube 40 des landwirtschaftlichen Traktors 10 in die Außenumgebung 36 aus.

Vorliegend befindet sich der weitere Axiallüfter 52 bezüglich der Richtung des Nebenkühlluftstroms 28 vor dem Wärmetauscherpaket 26, dieser kann jedoch auch dahinter angeordnet sein.

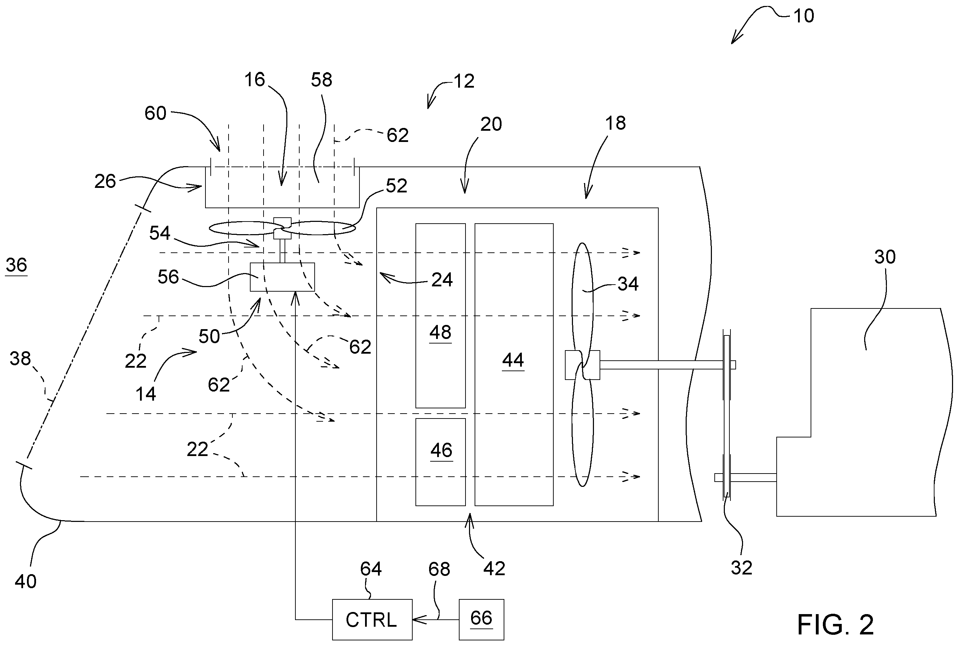

Genauer gesagt werden im ersten Betriebsmodus die Axiallüfter 34, 52 sowohl des Hauptkühlaggregats 18 wie auch des Nebenkühlaggregats 24 derart betrieben, dass voneinander unabhängige Kühlluftströme 22, 28 erzeugt werden, wohingegen in einem in Fig. 2 wiedergegebenen zweiten Betriebsmodus sich ausschließlich der Axiallüfter 34 des Hauptkühlaggregats 18 in Betrieb befindet. Der weitere Axiallüfter 52 des Nebenkühlaggregats 24 steht im zweiten Betriebsmodus still bzw. wird in einen Leerlaufbetriebszustand versetzt, in dem dieser eine lediglich geringe Lüfterdrehzahl im Bereich von 10 bis 15 Umdrehungen pro Minute aufweist, sodass aufgrund der stromaufwärts im Hauptkühlluftstrom 22 herrschenden Druckverhältnisse (die zur Ausbildung eines Unterdrucks führen) ein durch die zweite Wärmetauscheranordnung 26 in umgekehrter Richtung hindurchtretender bzw. aus der Außenumgebung 36 angesaugter passiver Nebenkühlluftstrom 62 hervorgerufen wird.

Eine Kontrolleinheit 64 koordiniert den Betrieb der Kühlaggregate 18, 24 durch Umschaltung zwischen den beiden Betriebsmodi. Hierbei wird der erste oder zweite Betriebsmodus in Abhängigkeit einer von der Kontrolleinheit 64 durchgeführten Ermittlung des aktuellen Kühlbedarfs der beiden Wärmetauscheranordnungen 20, 26 ausgewählt, wozu die in jeweiligen Kühlkreisläufen der Wärmetauscheranordnungen 20, 26 sensorisch erfassten Temperaturverhältnisse in Beziehung zur Außentemperatur gesetzt werden.

Zur sensorischen Erfassung der in den Kühlkreisläufen herrschenden Temperaturverhältnisse sowie der Außentemperatur ist eine entsprechende Anzahl von Temperatursensoren 66 vorhanden, deren Sensordaten der Kontrolleinheit 64 über einen fahrzeuginternen CAN-Datenbus 68 zugeführt werden.

Aus Gründen der Energieeffizienz erfolgt seitens der Kontrolleinheit 64 stets eine Priorisierung des in Fig. 2 gezeigten zweiten Betriebsmodus. Abweichend davon wird jedoch der erste Betriebsmodus ausgewählt, wenn die Kontrolleinheit 64 auf Grundlage der durchgeführten Kühlbedarfsermittlung erkennt, dass die durch Erzeugung des passiven Nebenkühlluftstroms 62 erzielbare Kühlleistung nicht genügt, um den Kühlbedarf der zweiten Wärmetauscheranordnung 26 verlässlich abzudecken. Gleiches gilt, wenn von der Kontrolleinheit 64 erkannt wird, dass die volle Leistung des Hauptkühlaggregats 18 zur ausreichenden Kühlung der ersten Wärmetauscheranordnung 20 erforderlich ist. Insofern wird also bei der Auswahl des Betriebsmodus von der Kontrolleinheit 64 der ermittelte Kühlbedarf der ersten Wärmetauscheranordnung 20 mitberücksichtigt.

Erfolgt eine Umschaltung in den zweiten Betriebsmodus, so wird die Intensität des Hauptkühlluftstroms 22 von der Kontrolleinheit 64 gegebenenfalls durch Ansteuerung des Hauptkühlaggregats 18 nach Maßgabe des für die erste Wärmetauscheranordnung 20 ermittelten Kühlbedarfs erhöht. Durch entsprechende Anhebung der Kühlleistung des Hauptkühlaggregats 18 lässt sich unter anderem verhindern, dass bei Außerbetriebnahme bzw. im Leerlaufbetriebszustand des Nebenkühlaggregats 24 die Kühlung der ersten Wärmetauscheranordnung 20 aufgrund der über den passiven Nebenkühlluftstrom 62 in den Hauptkühlluftstrom 22 zusätzlich eintretenden Abwärme der zweiten Wärmetauscheranordnung 26 beeinträchtigt wird.

## Patentansprüche

1. Verfahren zum Betreiben eines Fahrzeugkühlsystems, umfassend einen Hauptkühlpfad (14) sowie einen am Hauptkühlpfad (14) stromaufwärts abzweigenden Nebenkühlpfad (16), wobei dem Hauptkühlpfad (14) ein Hauptkühlaggregat (18) zur Erzeugung eines durch eine erste Wärmetauscheranordnung (20) hindurchtretenden Hauptkühlluftstroms (22) und dem Nebenkühlpfad (16) ein stromaufwärts im Hauptkühlpfad (14) liegendes Nebenkühlaggregat (24) zur Erzeugung eines durch eine zweite Wärmetauscheranordnung (26) hindurchtretenden Nebenkühlluftstroms (28) zugeordnet ist, **dadurch gekennzeichnet, dass** von einer Kontrolleinheit (64) in einem ersten Betriebsmodus sowohl das Hauptkühlaggregat (18) wie auch das Nebenkühlaggregat (24) betrieben wird, um voneinander unabhängige Kühlluftströme (22, 28) zu erzeugen, wohingegen von der Kontrolleinheit (64) in einem zweiten Betriebsmodus ausschließlich das Hauptkühlaggregat (18) betrieben bzw. das Nebenkühlaggregat (24) in einen Leerlaufbetriebszustand derart versetzt wird, sodass aufgrund der stromaufwärts im Hauptkühlluftstrom (22) herrschenden Druckverhältnisse ein durch die zweite Wärmetauscheranordnung (26) hindurchtretender passiver Nebenkühlluftstrom (62) hervorgerufen wird.

2. Verfahren nach Anspruch 1, **dadurch gekennzeichnet, dass** der erste oder zweite Betriebsmodus in Abhängigkeit einer von der Kontrolleinheit (64) durchgeführten Ermittlung des aktuellen Kühlbedarfs der zweiten Wärmetauscheranordnung (26) ausgewählt wird.

3. Verfahren nach Anspruch 2, **dadurch gekennzeichnet, dass** bei der Auswahl des Betriebsmodus von der Kontrolleinheit (64) ein ermittelter Kühlbedarf der ersten Wärmetauscheranordnung (20) mitberücksichtigt wird.

4. Verfahren nach Anspruch 2 oder 3, **dadurch gekennzeichnet, dass** zur Ermittlung des aktuellen Kühlbedarfs von der Kontrolleinheit (64) die in jeweiligen Kühlkreisläufen der Wärmetauscheranordnungen (20, 26) sensorisch erfassten Temperaturverhältnisse in Beziehung zur Außentemperatur gesetzt werden.

5. Verfahren nach wenigstens einem der vorhergehenden Ansprüche, **dadurch gekennzeichnet, dass** im zweiten Betriebsmodus die Intensität des Hauptkühlluftstroms (22) von der Kontrolleinheit (64) durch Ansteuerung des Hauptkühlaggregats (18) erhöht wird.

## Claims

1. Method for operating a vehicle cooling system, comprising a main cooling path (14) and a secondary cooling path (16) branching off upstream in the main cooling path (14), a main cooling unit (18) for generating a main cooling air flow (22) passing through a first heat exchanger arrangement (20) being associated with the main cooling path (14) and a secondary cooling unit (24), located upstream in the main cooling path (14), for generating a secondary cooling air flow (28) passing through a second heat exchanger arrangement (26) being associated with the secondary cooling path (16), **characterized in that**, in a first operating mode, both the main cooling unit (18) and the secondary cooling unit (24) are operated by a control unit (64) in order to generate mutually independent cooling air flows (22, 28), whereas, in a second operating mode, only the main cooling unit (18) is operated by the control unit (64) or the secondary cooling unit (24) is set to an idle operating state so that, due to the pressure conditions prevailing upstream in the main cooling air flow (22), a passive secondary cooling air flow (62) passing through the second heat exchanger arrangement (26) is produced.

2. Method according to Claim 1, **characterized in that** the first or second operating mode is selected according to an ascertainment of the current cooling requirement of the second heat exchanger arrangement (26) which is carried out by the control unit (64).

3. Method according to Claim 2, **characterized in that**, during the selection of the operating mode by the control unit (64), an ascertained cooling requirement of the first heat exchanger arrangement (20) is also taken into account.

4. Method according to Claim 2 or 3, **characterized in that**, for the ascertainment of the current cooling requirement by the control unit (64), the temperature conditions recorded using sensors in respective cooling circuits of the heat exchanger arrangements (20, 26) are correlated with the external temperature.

5. Method according to at least one of the preceding claims, **characterized in that**, in the second operating mode, the intensity of the main cooling air flow (22) is increased via the control unit (64) by activating the main cooling unit (18).

## Revendications

1. Procédé pour faire fonctionner un système de refroidissement de véhicule, comprenant un circuit de refroidissement principal (14) ainsi qu'un circuit de refroidissement secondaire (16) dérivant en amont au niveau du circuit de refroidissement principal (14), un groupe de refroidissement principal (18), destiné à générer un flux d'air de refroidissement principal (22) qui traverse un premier arrangement échangeur de chaleur (20), étant associé au circuit de refroidissement principal (14), et un groupe de refroidissement secondaire (24), situé en amont dans le circuit de refroidissement principal (14) et destiné à générer un flux d'air de refroidissement secondaire (28) qui traverse un deuxième arrangement échangeur de chaleur (26), au circuit de refroidissement secondaire (16), **caractérisé en ce que** le groupe de refroidissement principal (18) ainsi que le groupe de refroidissement secondaire (24) sont tous deux mis en fonctionnement par une unité de contrôle (64) dans un premier mode de fonctionnement afin de générer des flux d'air de refroidissement (22, 28) indépendants l'un de l'autre, tandis que dans un deuxième mode de fonctionnement, l'unité de contrôle (64) fait uniquement fonctionner le groupe de refroidissement principal (18) ou met le groupe de refroidissement auxiliaire (24) dans un état de fonctionnement à vide, de sorte que du fait des conditions de pression qui règnent en amont dans le flux d'air de refroidissement principal (22), un flux d'air de refroidissement secondaire passif (62) qui traverse le deuxième arrangement échangeur de chaleur (26) est produit.

2. Procédé selon la revendication 1, **caractérisé en ce que** le premier ou le deuxième mode de fonctionnement est sélectionné en fonction d'une détermination effectuée par l'unité de contrôle (64) du besoin de refroidissement actuel du deuxième arrangement échangeur de chaleur (26).

3. Procédé selon la revendication 2, **caractérisé en ce que**, lors de la sélection du mode de fonctionnement, l'unité de contrôle (64) prend également en compte un besoin de refroidissement déterminé du premier arrangement échangeur de chaleur (20).

4. Procédé selon la revendication 2 ou 3, **caractérisé en ce qu'**en vue de déterminer le besoin de refroidissement actuel, l'unité de contrôle (64) met en relation les conditions de température détectées par des capteurs dans des circuits de refroidissement respectifs des arrangements échangeurs de chaleur (20, 26) avec la température extérieure.

5. Procédé selon au moins l'une des revendications précédentes, **caractérisé en ce que**, dans le deuxième mode de fonctionnement, l'intensité du flux d'air de refroidissement principal (22) est augmentée par l'unité de contrôle (64) par commande du groupe de refroidissement principal (18).
